# EUROPEAN PATENT APPLICATION

(11) **EP 4 718 887 A1**
(43) Date of publication of application: **01.04.2026**
(21) Application number: 24921596.3
(22) Date of filing: 04.11.2024
(51) Int. Cl.: H04W 4/18

(54) **MULTI-LINK AGGREGATION TRANSMISSION METHOD AND SYSTEM FOR GROUP FULL-DUPLEX CALL SYSTEM**

(30) Priority: 29.01.2024 CN 202410121278
(71) Applicant: Shenzhen Ziwu Chuangxin Technology Co., Ltd., Shenzhen, Guangdong 518000 (CN)
(72) Inventor: CHEN, Wenyue, Hong Kong Cooperation Zone Shenzhen, Guangdong 518000 (CN); WANG, Xinzhong, Hong Kong Cooperation Zone Shenzhen, Guangdong 518000 (CN)
(74) Representative: Chung, Hoi Kan
(86) International application number: PCT/CN2024/129761
(87) International publication number: WO 2025/161572

(57) **Abstract**

The present invention relates to a multi-link aggregation transmission method and system for a group full-duplex call system. The method comprises: a network protocol stack receives, by means of a public network, a network audio data packet of a server, performs decapsulation processing on the network audio data packet, and transmits network audio data obtained by means of the decapsulation processing to a data fusion module; a wireless protocol stack receives, by means of an ad hoc network, a wireless audio data packet of a neighbour node arranged in the ad hoc network, performs decapsulation processing on the wireless audio data packet, and transmits wireless audio data obtained by means of the decapsulation processing to the data fusion module; and the data fusion module performs adaptive dynamic combination processing on the network audio data and the wireless audio data on the basis of an operation mode to obtain combined data, and transmits the combined data to an audio decoding module. The present invention achieves full-duplex communication by means of multi-link transmission, allows for communication in an area without base station coverage, and achieves reliable communication under the condition of strong interference.

## Description

### Technical Field

The present invention relates to the technical field of group calls, and in particular to a multi-link aggregation transmission method and system for a group full-duplex call system.

### Background Technology

There are two main implementation forms of existing group call systems. One is to implement it by radio, generally using VHF (frequency 136-174MHz) and UHF (frequency 400-470MHz) to achieve half-duplex wireless communication. The other is to use the operator's public network, which is divided into half-duplex and full-duplex modes. The half-duplex mode is represented by public network walkie-talkies, which require the use of the PTT button to seize the channel to make a sound. However, this traditional radio intercom method cannot achieve full-duplex calls. In an ecombinency, it cannot seize the channel in time to make a sound, and the communication is not real-time; when one party speaks, the other party can only listen. The full-duplex mode is mainly implemented by mobile phone software applications, such as online conference systems, but public network intercoms need to rely on the operator's network and cannot communicate in areas without base station coverage.

In recent years, with the development of short-range communication networking technologies such as Bluetooth and Zigbee, the use of short-range communication protocols to implement Adhoc (wireless Ad-Hoc Network) self-organizing networks for group calls has gradually ecombined. This is a dynamic, multi-hop mobile peer-to-peer network consisting of several to dozens of nodes. However, the use of short-range communication networking to implement Adhoc self-organizing network group calls has a limited transmission distance. In scenarios with obstruction and strong interference, data is easily lost, and reliable communication cannot be achieved.

### Summary of the Invention

The main purpose of the present invention is to provide a multi-link aggregation transmission method and system for a group full-duplex call system, which simultaneously transmits voice data through two links, a local wireless ad hoc network and a public network, to achieve full-duplex communication, and can communicate in areas without base station coverage, transmit data through two links, and achieve reliable communication.

To achieve the above object, the present invention provides a multi-link aggregation transmission method for a group full-duplex call system comprising following steps:
a network protocol stack receives, by means of a public network, a network audio data packet of a server, performs decapsulation processing on the network audio data packet, and transmits network audio data obtained by means of the decapsulation processing to a data fusion module;
a wireless protocol stack receives, by means of an ad hoc network, a wireless audio data packet of a neighbour node arranged in the ad hoc network, performs decapsulation processing on the wireless audio data packet, and transmits wireless audio data obtained by means of the decapsulation processing to the data fusion module; and
the data fusion module performs adaptive dynamic combination processing on the network audio data and the wireless audio data on a basis of an operation mode of a processor to obtain combined data, and transmits the combined data to an audio decoding module.

Further, before the step that a network protocol stack receives, by means of a public network, a network audio data packet of a server, the method further comprises following steps:
the processor obtains a voice data packet sent by a voice encoder and sends the voice data packet to the network protocol stack and the wireless protocol stack, respectively;
the network protocol stack connected to the processor encrypts and encapsulates received voice data packet according to preset encapsulation rules, and transmits encrypted and encapsulated network audio data packet to the server via the public network; and
the wireless protocol stack connected to the processor encrypts and encapsulates received voice data packet according to preset encapsulation rules, and transmits encrypted and encapsulated wireless audio data packet to the neighbour node via protocols of the ad hoc network.

Further, the voice encoder encodes voice streams collected by a microphone according to a preset encoding standard, performs packet processing on a continuous frame data packet obtained by encoding, and sends a voice data packet obtained by packet processing to the processor.

Further, the steps of performing packet processing on a continuous frame data packet obtained by encoding, and sending a voice data packet obtained by packet processing to the processor comprise:
adding header information including length, encoding format, sampling rate, and number of channels of the continuous frame data packet to the continuous frame data packet; extracting characteristic data of the continuous frame data packet; encrypting the continuous frame data packet to obtain an encrypted data packet; setting characteristic data as decryption instructions for the encrypted data packet; filling the characteristic data into five vertical columns and five horizontal columns, respectively, and arranging sequentially according to a preset fence arrangement rule to obtain five vertical fence data and five horizontal fence data; interleaving the five vertical fence data and the five horizontal fence data to obtain a fence password that conforms to preset rules; and performing packet processing on the encrypted data packet and the fence password to obtain the voice data packet; and sending the voice data packet to the processor.

Further, the step that a network protocol stack receives, by means of a public network, a network audio data packet of a server comprises:
the network protocol stack connected to a target node receives the network audio data packet via a receive queue, reads address information, sequence number, and timestamp of the network audio data packet, requeues the network audio data packet received within a preset buffering time in a receive queue according to the sequence number and timestamp, detects uniqueness of the network audio data packet based on the address information, sequence number, and timestamp, and, when multiple duplicate network audio data packet are detected, performs duplicate filtering on the network audio data packet to obtain a unique network audio data packet.

Further, the steps of performing decapsulation processing on the network audio data packet, and transmitting network audio data obtained by means of the decapsulation processing to a data fusion module comprise:
decapsulating the network audio data packet by using the network protocol stack according to a preset decapsulation table; specifically, determining whether the address information, sequence number, and timestamp of the network audio data packet meet requirements by using the decapsulation table; and when the address information, sequence number, and timestamp meet requirements of the decapsulation table, decapsulating the network audio data packet according to decapsulation rules of the decapsulation table to obtain the network audio data, and transmitting the network audio data to the data fusion module.

Further, the steps that a wireless protocol stack receives, by means of an ad hoc network, a wireless audio data packet of a neighbour node arranged in the ad hoc network comprise:
the wireless protocol stack connected to the target node receives the wireless audio data packet from the neighbour node via the ad hoc network, reads address information, sequence number, and timestamp of the wireless audio data packet, detects uniqueness of the wireless audio data packet based on the address information, sequence number, and timestamp, and, when multiple duplicate wireless audio data packet are detected, performs duplicate filtering on the wireless audio data packet to obtain a unique wireless audio data packet.

Further, the steps of performing decapsulation processing on the wireless audio data packet, and transmitting wireless audio data obtained by means of the decapsulation processing to the data fusion module comprise:
decapsulating the wireless audio data packet by using the wireless protocol stack according to a preset decapsulation table; specifically, determining whether address information, sequence number, and timestamp of the wireless audio data packet meet requirements by using the decapsulation table; and when the address information, sequence number, and timestamp meet requirements of the decapsulation table, decapsulating the wireless audio data packet according to decapsulation rules of the decapsulation table to obtain the wireless audio data, and transmitting the wireless audio data to the data fusion module.

Further, the steps that the data fusion module performs adaptive dynamic combination processing on the network audio data and the wireless audio data on a basis of an operation mode of a processor to obtain combined data, and transmits the combined data to an audio decoding module, comprise:
the data fusion module detects whether the operation mode of the processor is single-link operation mode or multi-link operation mode;
when the operation mode is single-link operation mode, the data fusion module receives the network audio data sent by a single operation network protocol stack or the wireless audio data sent by a single operation wireless protocol stack, queues and filters the network audio data or wireless audio data received to obtain queued data, and transmits the queued data to the audio decoding module;
when the operation mode is multi-link operation mode, the data fusion module receives the first data sent by either the network protocol stack or the wireless protocol stack within a preset receiving time, determines whether integrity of first data meets requirements, and when the first data meets the requirements, marks the first data as valid data; when the data fusion module receives second data sent by another party within the preset receiving time, determines whether integrity of the second data meets the requirements, when the second data meets the requirements, converts the second data and the first data according to a preset data conversion table, compares the first data and the second data converted to obtain deviation data, determines whether the deviation data meets requirements of preset deviation rules, and when the deviation data meets the requirements, obtains a common sequence number of the two data, clears the second data, combines the first data and the deviation data to obtain the combined data of the network audio data and the wireless audio data, and transmits the combined data to the audio decoding module in sequence according to a common sequence number.

The present invention further provides a multi-link aggregation transmission system for a group full-duplex call system, comprising:
an acquisition module, configured to receive a network audio data packet from a server via a public network through a network protocol stack, decapsulate the network audio data packet, and transmit the network audio data decapsulated to a data fusion module;
a collection module, configured to receive wireless audio data packet from a neighbour node in an ad hoc network via a wireless protocol stack, decapsulate the wireless audio data packet, and transmit decapsulated wireless audio data to a data fusion module; and
a processing module, configured to combine the network audio data and the wireless audio data through the data fusion module to generate combined data, and transmit the combined data to an audio decoding module.

The multi-link aggregation transmission method and system for a group full-duplex call system provided by the present invention have the following beneficial effects:
The present invention receives network audio data and wireless audio data respectively through the network protocol stack and the wireless protocol stack, realizes multi-link transmission, increases transmission bandwidth and stability, improves call quality and reliability, and can communicate in areas without base station coverage. The received network audio data packet and wireless audio data packet are unpacked and restored to the original audio data, ensuring that the transmitted audio data is complete and correct. The network audio data and wireless audio data are combined and processed by the data fusion module to obtain combined data. Through data fusion, the advantages of multi-link transmission can be fully utilized to improve call quality and capacity. Finally, the combined data is transmitted to the audio decoding module for decoding, and the combined data is restored to an audible audio signal.

### Brief Description of the Drawings

Figure 1 is a flow chart of a multi-link aggregation transmission method for a group full-duplex call system provided by the present invention;
Figure 2 is another flow chart of a multi-link aggregation transmission method for a group full-duplex call system provided by the present invention;
Figure 3 is a data transmission structure chart of a network protocol stack and a wireless protocol stack for a multi-link aggregation transmission method for a group full-duplex call system provided by the present invention.

The purpose, features and advantages of the present invention will be further described with reference to the accompanying drawings and in conjunction with the embodiments.

### Embodiments of the present invention

### Specific Embodiments

In order to make the purpose, technical solutions and advantages of the present invention more clearly understood, the present invention will be further described in detail below with reference to the accompanying drawings and embodiments. It should be understood that the specific embodiments described herein are only used to explain the present invention and are not intended to limit the present invention.

The present invention will be further described below with reference to the accompanying drawings and specific embodiments.

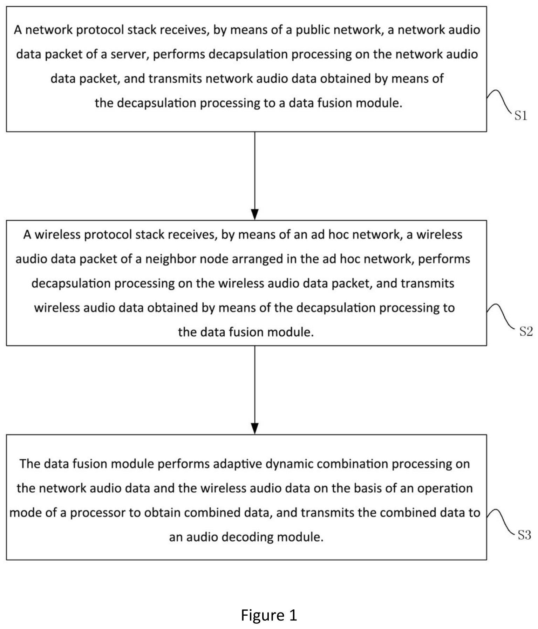

As shown in Figures 1-3, the present invention provides a multi-link aggregation transmission method for a group full-duplex call system, comprising:
step 1: a network protocol stack receives, by means of a public network, a network audio data packet of a server, performs decapsulation processing on the network audio data packet, and transmits network audio data obtained by means of the decapsulation processing to a data fusion module;
step 2: a wireless protocol stack receives, by means of an ad hoc network, a wireless audio data packet of a neighbour node arranged in the ad hoc network, performs decapsulation processing on the wireless audio data packet, and transmits wireless audio data obtained by means of the decapsulation processing to the data fusion module; and
step 3: the data fusion module performs adaptive dynamic combination processing on the network audio data and the wireless audio data on the basis of an operation mode of a processor to obtain combined data, and transmits the combined data to an audio decoding module.

Wherein, the neighbour node comprises an initial source node for sending initial data in the ad hoc network and a relay node for forwarding and relaying in the ad hoc network. The data fusion module can detect the adaptive operation mode of the system and determine whether the system operates in multi-link or single-link operation mode. When the adaptive operation mode of the system is detected, the corresponding operation mode is used to process data. The system has following adaptive operation modes:
1. Simultaneous multi-link operation, where all group members have multiple links.
2. Operation using a single network mode, where all group members use a single network mode.
3. Operation using a single wireless ad hoc network, where all group members use a single wireless ad hoc network mode.
4. Mixed use, where some members use the network mode and some members use the wireless ad hoc network. In this case, the network can be adaptively divided into multiple small groups, which are then used to form a large group. At least one node in each small group has multiple links.
As described above, the specific steps comprise:
Step 1: a network protocol stack receives, by means of a public network, a network audio data packet of a server, and the network protocol stack is responsible for processing network communications, including receiving and sending data packets, decapsulating the received network audio data packet, and transmitting the decapsulated network audio data to a data fusion module,
wherein the decapsulation process comprises following steps:
   a. decryption: decrypt the received network audio data packet to restore it to unencrypted network audio data;
   b. data parsing: unpack, decompress, convert the data format, and decode the unencrypted network audio data to restore it to the original audio data; and
   c. error detection and correction: error detection and correction are performed on the original audio data to obtain network audio data.
Step 2: a wireless protocol stack receives, by means of an ad hoc network, a wireless audio data packet of a neighbour node arranged in the ad hoc network, and the wireless protocol stack is responsible for processing wireless communications, including receiving and sending data packets, and transmitting the decapsulated wireless audio data to the data fusion module.

The received wireless audio data packet is decapsulated, and the decapsulation process comprises following steps:
a. decryption: decrypt the received wireless audio data packet to restore it to unencrypted wireless audio data;
b. data parsing: unpack, decompress, convert the data format, and decode the unencrypted network audio data to restore it to the original audio data; ans
c. error detection and correction: error detection and correction are performed on the original audio data to obtain wireless audio data.

Step 3: the data fusion module receives the network audio data and wireless audio data from steps 1 and 2. The data fusion module combines the network audio data and the wireless audio data according to the operation mode of the processor to obtain the combined data, and transmits the combined data to the audio decoding module through the internal data transmission mechanism. When the audio decoding module decodes the received combined data, it converts it into the original audio signal. As needed, the decoded audio signal is further processed, such as audio enhancement, noise reduction, equalization, etc., and finally the original audio signal is output through the audio decoding module.

The data fusion module can select one of the following merging processing methods based on the received network audio data and wireless audio data for merging processing, and the merging processing methods comprise:
simple mixing: add the network audio data and the wireless audio data in a certain ratio to obtain combined data;
time division multiplexing: divide the network audio data and the wireless audio data according to time slices and transmit them alternately to obtain combined data; and
frequency division multiplexing: divide the network audio data and the wireless audio data according to frequency, transmit them separately, and then combine them to obtain combined data.
The present invention provides a multi-link aggregation transmission method for a group full-duplex call system, which receives network audio data packet through a network protocol stack and wireless audio data packet through a wireless protocol stack, so that audio data can be received from a public network and a self-organizing network respectively, ensuring the stability and accuracy of the audio signal, and providing a reliable data source for subsequent data processing and transmission, and expanding the communication range and enhancing the flexibility of communication. Among them, multi-link transmission is achieved through the network protocol stack to increase the transmission bandwidth and stability, and communication can be carried out in areas without base station coverage through the wireless protocol stack, realizing a wider range of communication. The network audio data and the wireless audio data are combined and processed by the data fusion module, which can eliminate problems such as packet loss and jitter in network transmission, reduce the loss and deformation of audio data, and thus provide a clearer and more stable audio signal. Moreover, through the combination processing, when there is a problem or interruption in the network link or the wireless link, the audio data transmitted by the other link can still be obtained, avoiding the complete loss of data and ensuring the continuity and reliability of communication.

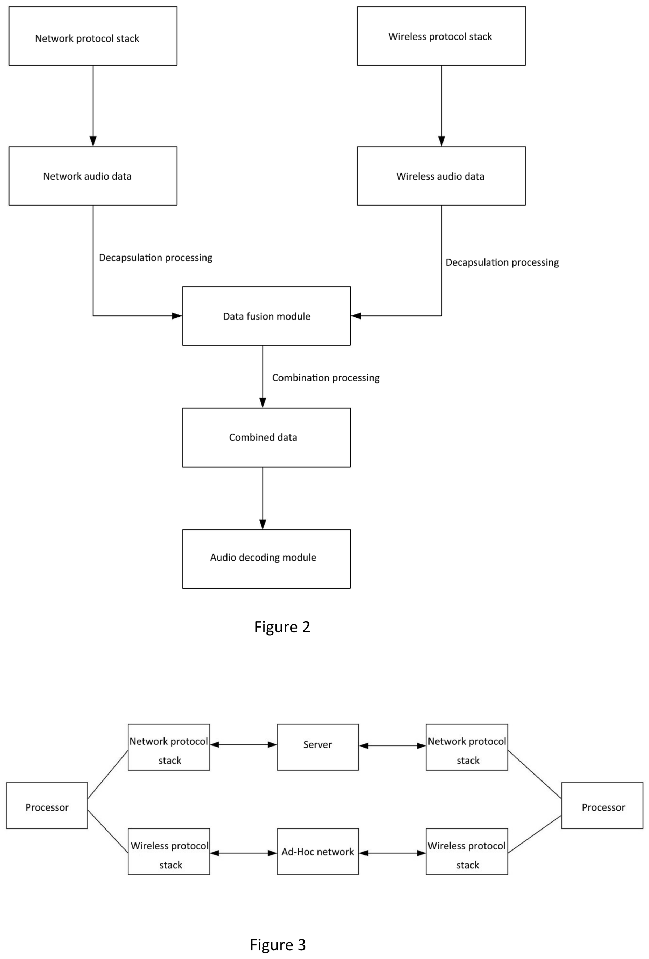

As shown in figure 3, in one embodiment, before the steps that a network protocol stack receives, by means of a public network, a network audio data packet of a server, the method further comprises:
The processor obtains the voice data packet sent by the voice encoder and copies the voice data packet into two copies, sending them to the network protocol stack and the wireless protocol stack, respectively.

After receiving the voice data packet, the network protocol stack connected to the processor encrypts and encapsulates the voice data packet. According to preset encapsulation rules, the network protocol stack adds metadata and control information contained in the additional transport layer, as well as an encryption algorithm, during the encapsulation process to obtain a network audio data packet, which is then transmitted to the server via the public network.

After receiving the voice data packet, the wireless protocol stack connected to the processor encrypts and encapsulates the received voice data packet. According to preset encapsulation rules, the wireless protocol stack adds metadata and control information contained in the transport layer, as well as an encryption algorithm, during the encapsulation process to obtain a wireless audio data packet. The wireless audio data packet is then transmitted to a neighbour node in the ad hoc network using the ad hoc network protocol. When the ad hoc network detects that the target node where the audio decoding module is located and the initial transmitting node are within radio frequency coverage, the wireless audio data packet can be directly transmitted to the target node where the audio decoding module is located, without having to pass through a relay node in the neighbour node and then forward it to the target node where the audio decoding module is located.

The present embodiment uses a combination of public networks and ad hoc networks to provide remote communication capabilities on the public network, and ad hoc networks can provide local communication in areas or specific environments without public network coverage, thereby achieving wider communication coverage and increasing the flexibility of communication methods. By replicating voice data packet and sending it to the network protocol stack and wireless protocol stack respectively, even if a problem occurs in one communication link, data can still be transmitted through the other communication link, thereby improving the system's fault tolerance and protecting data security and confidentiality.

In one embodiment, a voice encoder encodes the voice streams captured by a microphone according to a preset encoding standard, performs packet processing on the encoded continuous frame data packet, and sends the packetized voice data packet to a processor.

The present embodiment uses a voice encoder to encode the voice streams captured by the microphone, converting the voice signal into digital data for transmission and processing in a digital communication system, achieving efficient voice compression and transmission, and saving bandwidth and storage space. By performing packet processing on the encoded continuous frame data packet, the continuous voice data is divided into smaller data packets for transmission during the communication process. This can improve the efficiency and real-time performance of data transmission and reduce transmission delays.

In one embodiment, packet processing is performed on the encoded continuous frame data packet, and the voice data packet obtained from the packet processing are sent to a processor, including:

Header information added to the continuous frame data packet comprises information such as the length, the encoding format, the sampling rate, and the number of channels of the continuous frames. Such information is added so as to help a receiving end correctly parse and process the voice data. Feature data is extracted from the continuous frame data packet. The extracted feature data is used for subsequent encryption and decryption operations. The feature data can be key parameters or identifiers used to identify and process the voice data. An encryption operation is performed on a continuous frame data packet, wherein the encryption algorithm used for the encryption operation can use methods such as symmetric encryption and asymmetric encryption to ensure that only authorized receiving ends can decrypt and restore the voice data. The feature data is set as decryption instructions for the encrypted data packets, and the feature data is filled into five vertical columns according to a preset fence arrangement rule, and the feature data is also filled into five horizontal columns according to a preset fence arrangement rule. Then, the filled five vertical fence data and five horizontal fence data are interleaved and sorted to obtain a fence password that conforms to preset rules. The encrypted data packet and the fence password are packaged to obtain a final voice data packet, which is then sent to the processor.

The voice data packet comprises the encrypted data packet and the fence password. By reverse-engineering the fence password according to the corresponding decryption rules, the corresponding feature data can be restored. The encrypted data can then be decrypted using the feature data to obtain a continuous frame data packet.

The present embodiment improves the security of voice data through encryption processing, ensuring that only the corresponding processor can decrypt and restore the voice data, thereby protecting the confidentiality of the data. By adding header information and feature data, the receiving end can accurately parse and process the voice data, ensuring the integrity and correctness of the data. Through fence cipher generation and interleaved sorting, the structure of the voice data packet is complicated, enhancing the data's anti-interference ability and reducing errors and losses during data transmission. Through packet processing, the structure of the voice data packet can be adjusted and expanded as needed to adapt to different application scenarios and requirements.

As shown in Figures 2-3, in one embodiment, the steps that a network protocol stack receives, by means of a public network, a network audio data packet of a server comprise:
Connecting to a target node, the network protocol stack receives the network audio data packet sent from the server via the public network, and caches the network audio data packet received within a preset buffer time (the preset buffer time range is 100-2000ms) in a receiving queue.

The network protocol stack reads the address information, sequence number, and timestamp of the network audio data packet from the receive queue. Within a preset buffering time, the network protocol stack processes link delay and jitter and dynamically adjusts the buffering time based on the link delay. Network audio data packet arriving within the buffering time range are re-queued in a receive queue based on their sequence number and timestamp. The network protocol stack also checks the uniqueness of the network audio data packet based on the address information, sequence number, and timestamp. If multiple duplicate network audio data packet are detected, the network protocol stack filters the duplicate packets and retains only the single, unique network audio data packet.

By caching audio data packets in a receiving queue for a certain period of time and dynamically adjusting the caching time based on link delay, the network protocol stack can effectively handle link delay and jitter. Furthermore, by using sequence numbers and timestamps, the network protocol stack can ensure that audio data packets are processed at the appropriate time and in the order in which they are sent. Furthermore, by detecting address information, sequence numbers, and timestamps, the network protocol stack can identify and filter out multiple duplicate audio data packets, retaining only unique data packets. This avoids repeated processing of identical audio data and the unnecessary burden that duplicate audio data imposes on the system, improves processing efficiency, and ensures the accuracy and consistency of audio data.

As shown in figures 2-3, in one embodiment, a network audio data packet is decapsulated and the read and processed network audio data is transmitted to a data fusion module, including:
A decapsulation table is preset, containing requirements for address information, sequence numbers, and timestamps, as well as corresponding decapsulation rules. The decapsulation table is used to determine whether a network audio data packet meets the requirements and to determine how to decapsulate the corresponding network audio data packet.

After receiving a network audio data packet, the network protocol stack first reads the address information, sequence number, and timestamp of the network audio data packet. Based on the requirements in the unpacking table, the stack determines whether the address information, sequence number, and timestamp meet the requirements. If the address information, sequence number, and timestamp meet the requirements in the unpacking table, the stack unpacks the network audio data packet according to the unpacking rules in the unpacking table. The unpacking operation comprises decryption, decompression, and data format conversion, resulting in the original network audio data.

The unpacked network audio data is transmitted to the data fusion module of the processor for subsequent processing.

The present embodiment decapsulates network audio data packet that meet the requirements according to the decapsulation rules of the decapsulation table and restores them to the original network audio data. Other data packets that do not meet the requirements are filtered out, thereby reducing the processing and transmission of invalid data, improving processing efficiency, and ensuring data integrity and correctness.

As shown in figures 2-3, in one embodiment, receiving wireless audio data packet from neighbour nodes in an ad hoc network through a wireless protocol stack according to an ad hoc network comprises:
The wireless protocol stack connected to the target node receives wireless audio data packet from multiple neighbour nodes through the ad hoc network, sequentially reads the address information, sequence number, and timestamp of the wireless audio data packet, detects uniqueness of the wireless audio data packet based on the address information, sequence number, and timestamp, and when multiple duplicate wireless audio data packet are detected, performs duplicate filtering on the wireless audio data packet to obtain a unique wireless audio data packet.

The present embodiment receives wireless audio data packet from neighbour nodes in an ad hoc network through an ad hoc network, thereby improving the stability of the wireless network, expanding the coverage of the wireless network, and enhancing the reliability and fault tolerance of communication. Through uniqueness detection, duplicate wireless audio data packet are removed to ensure the uniqueness of each wireless audio data packet. Duplicate filtering is performed to retain unique data packets, reducing the processing, transmission and impact of duplicate data, ensuring data integrity and correctness, and improving processing efficiency.

As shown in figures 2-3, in one embodiment, decapsulating a wireless audio data packet and transmitting the decapsulated wireless audio data to a data fusion module comprises:
Preset a decapsulation table, wherein the decapsulation table comprises requirements for address information, sequence number, and timestamp, as well as corresponding decapsulation rules; and the decapsulation table is used to determine whether the wireless audio data packet meets the requirements and to determine how to decapsulate the corresponding wireless audio data packet.

After receiving the wireless audio data packet, the wireless protocol stack first reads the address information, sequence number, and timestamp of the wireless audio data packet and, based on the requirements in the decapsulation table, determines whether the address information, sequence number, and timestamp meet the requirements. If the address information, sequence number, and timestamp meet the requirements in the decapsulation table, the wireless audio data packet is decapsulated based on the decapsulation rules in the decapsulation table. The decapsulation operation comprises decryption, decompression, and data format conversion, thereby obtaining the original wireless audio data.

The decapsulated wireless audio data is transmitted to the data fusion module of the processor for subsequent processing.

The present embodiment decapsulates qualified wireless audio data packet according to the decapsulation rules in the decapsulation table and restores them to the original wireless audio data. Other unqualified data packets are filtered out, thereby reducing the processing and transmission of invalid data, improving processing efficiency, and ensuring data integrity and accuracy.

As shown in Figures 2-3, in one embodiment, the data fusion module combines the network audio data and the wireless audio data to obtain combined data, and transmits the combined data to the audio decoding module, including:
Detect, by the data fusion module, whether the operation mode of the processor is a single-link operation mode or a multi-link operation mode;
When the operation mode is the single-link operation mode, the data fusion module receives network audio data sent by a single operation network protocol stack or wireless audio data sent by a single operation wireless protocol stack, queues and performs duplicate filtering on the received network audio data or wireless audio data to obtain queued data, and transmits the queued data to the audio decoding module;
When the operation mode is the multi-link operation mode, the data fusion module receives the first data sent by either the network protocol stack or the wireless protocol stack within a preset receiving time, determines whether the integrity of the first data meets the requirements, and marks the first data as valid data if it meets the requirements.

The data fusion module receives the second data sent by the other party within a preset receiving time, determines whether the integrity of the second data meets the requirements, and proceeds to the next step of processing if the second data meets the requirements. According to a preset data conversion table, the first data and the second data are converted and processed, and the converted first and second data are compared to obtain deviation data.

Determine whether the deviation data meets the requirements of the preset deviation rule. If the deviation data meets the requirements, obtain the common sequence number of the first and second data, clear the second data, and combine the first data with the deviation data to obtain the combined data of the network audio data and the wireless audio data. The combined data is sequentially transmitted to the audio decoding module of the processor according to the common sequence number for subsequent processing.

In the present embodiment, by determining the integrity of the first and second data, only complete data is marked as valid data for subsequent processing, thereby improving data reliability and avoiding the processing of incomplete or damaged data. By converting and comparing the first and second data to obtain deviation data, it helps to detect differences and deviations between the data and provides a basis for subsequent merging processing. By determining whether the deviation data meets the requirements of the preset deviation rules, the deviation data can be screened, which helps to eliminate the deviation data that does not meet the requirements and retain the data that meets the requirements, thereby improving the accuracy and reliability of the data. By obtaining the common serial number of the first and second data, the order of the combined data is ensured to be correct, which helps to maintain the time sequence of the data and avoid data dislocation or confusion.

In another embodiment, the present invention further provides a multi-link aggregation transmission system for a group full-duplex call system, comprising:
an acquisition module, configured to receive a network audio data packet from a server via a public network through a network protocol stack, decapsulate the network audio data packet, and transmit the network audio data decapsulated to a data fusion module;
a collection module, configured to receive wireless audio data packet from a neighbour node in an ad hoc network via a wireless protocol stack, decapsulate the wireless audio data packet, and transmit decapsulated wireless audio data to a data fusion module; and
a processing module, configured to combine the network audio data and the wireless audio data through the data fusion module to obtain combined data, and transmit the combined data to the audio decoding module.

The present invention provides a multi-link aggregation transmission system for a group full-duplex call system. Network audio data and wireless audio data are received through a network protocol stack and a wireless protocol stack, respectively, achieving multi-link transmission, increasing transmission bandwidth and stability, improving call quality and reliability, and enabling communication in areas without base station coverage. Received network audio data packet and wireless audio data packet are decapsulated and restored to their original audio data, ensuring the integrity and accuracy of the transmitted audio data. A data fusion module combines the network audio data and wireless audio data to generate combined data. Data fusion fully utilizes the advantages of multi-link transmission and improves call quality and capacity. Finally, the combined data is transmitted to an audio decoding module for decoding, restoring the combined data to an audible audio signal.

The above descriptions are merely preferred embodiments of the present invention and do not limit the scope of the present invention. Any equivalent structure or equivalent process transformation based on the contents of the present invention's specification and drawings, or any direct or indirect application in other related technical fields, is also comprised within the scope of the present invention.

## Claims

1. A multi-link aggregation transmission method for a group full-duplex call system, comprising following steps:
a network protocol stack receives, by means of a public network, a network audio data packet of a server, performs decapsulation processing on the network audio data packet, and transmits network audio data obtained by means of the decapsulation processing to a data fusion module;
a wireless protocol stack receives, by means of an ad hoc network, a wireless audio data packet of a neighbour node arranged in the ad hoc network, performs decapsulation processing on the wireless audio data packet, and transmits wireless audio data obtained by means of the decapsulation processing to the data fusion module; and
the data fusion module performs adaptive dynamic combination processing on the network audio data and the wireless audio data on a basis of an operation mode of a processor to obtain combined data, and transmits the combined data to an audio decoding module.

2. The multi-link aggregation transmission method for a group full-duplex call system according to claim 1, wherein before the step that a network protocol stack receives, by means of a public network, a network audio data packet of a server, the method further comprises the following steps:
the processor obtains a voice data packet sent by a voice encoder and sends the voice data packet to the network protocol stack and the wireless protocol stack, respectively;
the network protocol stack connected to the processor encrypts and encapsulates received voice data packet according to preset encapsulation rules, and transmits encrypted and encapsulated network audio data packet to the server via the public network; and
the wireless protocol stack connected to the processor encrypts and encapsulates received voice data packet according to preset encapsulation rules, and transmits encrypted and encapsulated wireless audio data packet to the neighbour node via protocols of the ad hoc network.

3. The multi-link aggregation transmission method for a group full-duplex call system according to claim 2, wherein the voice encoder encodes voice streams collected by a microphone according to a preset encoding standard, performs packet processing on a continuous frame data packet obtained by encoding, and sends a voice data packet obtained by packet processing to the processor.

4. The multi-link aggregation transmission method for a group full-duplex call system according to claim 3, wherein the steps of performing packet processing on a continuous frame data packet obtained by encoding, and sending a voice data packet obtained by packet processing to the processor comprise:
adding header information including length, encoding format, sampling rate, and number of channels of the continuous frame data packet to the continuous frame data packet; extracting characteristic data of the continuous frame data packet; encrypting the continuous frame data packet to obtain an encrypted data packet; setting characteristic data as decryption instructions for the encrypted data packet; filling the characteristic data into five vertical columns and five horizontal columns, respectively, and arranging sequentially according to a preset fence arrangement rule to obtain five vertical fence data and five horizontal fence data; interleaving the five vertical fence data and the five horizontal fence data to obtain a fence password that conforms to preset rules; and performing packet processing on the encrypted data packet and the fence password to obtain the voice data packet; and sending the voice data packet to the processor.

5. The multi-link aggregation transmission method for a group full-duplex call system according to claim 2, wherein the step that a network protocol stack receives, by means of a public network, a network audio data packet of a server comprises:
the network protocol stack connected to a target node receives the network audio data packet via a receive queue, reads address information, sequence number, and timestamp of the network audio data packet, requeues the network audio data packet received within a preset buffering time in a receive queue according to the sequence number and timestamp, detects uniqueness of the network audio data packet based on the address information, sequence number, and timestamp, and, when multiple duplicate network audio data packet are detected, performs duplicate filtering on the network audio data packet to obtain a unique network audio data packet.

6. The multi-link aggregation transmission method for a group full-duplex call system according to claim 5, wherein the steps of performing decapsulation processing on the network audio data packet, and transmitting network audio data obtained by means of the decapsulation processing to a data fusion module comprise:
decapsulating the network audio data packet by using the network protocol stack according to a preset decapsulation table; determining whether the address information, sequence number, and timestamp of the network audio data packet meet requirements by using the decapsulation table; and if the address information, sequence number, and timestamp meet requirements of the decapsulation table, decapsulating the network audio data packet according to decapsulation rules of the decapsulation table to obtain the network audio data, and transmitting the network audio data to the data fusion module.

7. The multi-link aggregation transmission method for a group full-duplex call system according to claim 2, wherein the steps that a wireless protocol stack receives, by means of an ad hoc network, a wireless audio data packet of a neighbour node arranged in the ad hoc network comprise:
the wireless protocol stack connected to a target node receives the wireless audio data packet from the neighbour node via the ad hoc network, reads address information, sequence number, and timestamp of the wireless audio data packet, detects uniqueness of the wireless audio data packet based on the address information, sequence number, and timestamp, and, if multiple duplicate wireless audio data packet are detected, performs duplicate filtering on the wireless audio data packet to obtain a unique wireless audio data packet.

8. The multi-link aggregation transmission method for a group full-duplex call system according to claim 7, wherein the steps of performing decapsulation processing on the wireless audio data packet, and transmitting wireless audio data obtained by means of the decapsulation processing to the data fusion module comprise:
decapsulating the wireless audio data packet by using the wireless protocol stack according to a preset decapsulation table; determining whether address information, sequence number, and timestamp of the wireless audio data packet meet requirements by using the decapsulation table; and if the address information, sequence number, and timestamp meet requirements of the decapsulation table, decapsulating the wireless audio data packet according to decapsulation rules of the decapsulation table to obtain the wireless audio data, and transmitting the wireless audio data to the data fusion module.

9. The multi-link aggregation transmission method for a group full-duplex call system according to claim 1, wherein the steps that the data fusion module performs adaptive dynamic combination processing on the network audio data and the wireless audio data on a basis of an operation mode of a processor to obtain combined data, and transmits the combined data to an audio decoding module, comprise:
the data fusion module detects whether the operation mode of the processor is single-link operation mode or multi-link operation mode;
if the operation mode is single-link operation mode, the data fusion module receives the network audio data sent by a single operation network protocol stack or the wireless audio data sent by a single operation wireless protocol stack, queues and filters the network audio data or wireless audio data received to obtain queued data, and transmits the queued data to the audio decoding module; and
if the operation mode is multi-link operation mode, the data fusion module receives the first data sent by either the network protocol stack or the wireless protocol stack within a preset receiving time, determines whether integrity of first data meets requirements, and if the first data meets the requirements, marks the first data as valid data; when the data fusion module receives second data sent by another party within the preset receiving time, determines whether integrity of the second data meets the requirements, if the second data meets the requirements, converts the second data and the first data according to a preset data conversion table, compares the first data and the second data converted to obtain deviation data, determines whether the deviation data meets requirements of preset deviation rules, and if the deviation data meets the requirements, obtains a common sequence number of the two data, clears the second data, combines the first data and the deviation data to obtain the combined data of the network audio data and the wireless audio data, and transmits the combined data to the audio decoding module in sequence according to a common sequence number.

10. A multi-link aggregation transmission system for a group full-duplex call system, comprising:
an acquisition module, configured to receive a network audio data packet from a server via a public network through a network protocol stack, decapsulate the network audio data packet, and transmit the network audio data decapsulated to a data fusion module;
a collection module, configured to receive wireless audio data packet from a neighbour node in an ad hoc network via a wireless protocol stack, decapsulate the wireless audio data packet, and transmit decapsulated wireless audio data to a data fusion module; and
a processing module, configured to combine the network audio data and the wireless audio data through the data fusion module to generate combined data, and transmit the combined data to an audio decoding module.
